# EUROPEAN PATENT SPECIFICATION

(11) **EP 3 168 950 B1**
(45) Date of publication and mention of the grant of the patent: **16.10.2019**
(21) Application number: 15382561.7
(22) Date of filing: 11.11.2015
(51) Int. Cl.: H02J 3/38, H02J 3/46

(54) **ELECTRIC POWER DISTRIBUTION SYSTEM FOR AN AIRCRAFT**
STROMVERTEILUNGSSYSTEM FÜR EIN FLUGZEUG
SYSTÈME DE DISTRIBUTION D'ÉNERGIE ÉLECTRIQUE POUR UN AÉRONEF

(43) Date of publication of application: 17.05.2017
(73) Proprietor: Airbus Operations, S.L., 28906 Getafe (Madrid) (ES)
(72) Inventor: DEMELAS, Salvatore, 28906 GETAFE (Madrid) (ES)
(74) Representative: Carpintero Lopez, Francisco

(56) References cited:
- US-A- 5 077 485
- US-A1- 2006 108 882
- US-A1- 2013 310 994

## Description

### Object of the invention

The present invention refers to a new electric power distribution system for an aircraft, in particular, for those aircrafts having multiple electrical generators powered by the same engine gearbox, and whose electric power distribution architecture uses a dedicated set of power feeder wires between each electrical power generator and the power distribution center of the aircraft.

An object of the invention is to provide an electric power distribution system that minimizes the weight of conventional electric power distribution systems, at the same time that simplifies the link between the electrical power generators of the engine and the power distribution center of the aircraft.

Another object of the present invention is to provide an electric power distribution system that reduces the number of generator control units (GCU) required for the engine to supply electric power to the aircraft, allowing saving costs and space when installed in the aircraft.

### Background of the invention

The auxiliary power unit (APU) is a gas turbine engine that supplies electrical and pneumatic power to the aircraft systems as an auxiliary or secondary source of power. The APU allows the aircraft to be autonomous of external electric and pneumatic power sources on ground and in-flight.

The gearbox of the APU transfers power from the engine to electric power generators. These generators supply electric power to the power distribution center of the aircraft. The APU turbomachinery is mounted in a dedicated fire compartment in the tail cone of the aircraft, the APU compartment, while the power distribution center is traditionally installed in the nose section.

To meet the aircraft power needs, in some of the current designs, the APU turbomachine drives two electric power generators. These two generators operate as two independent power sources, so that the control and distribution of these conventional electric power distribution systems is fully duplicated. Thus, current electric power distribution systems comprise two sets of power feeder wires for connecting each generator with the power distribution center, and two generator control units, one generator control unit for each electric power generator.

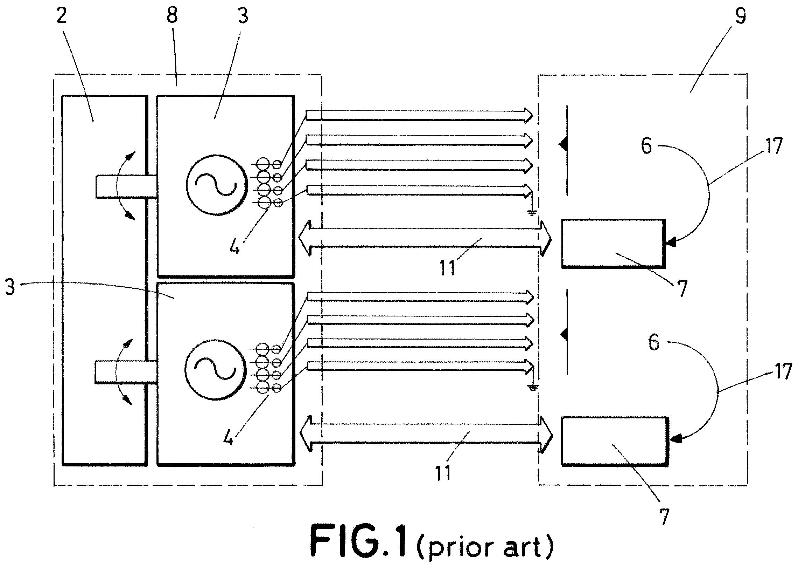

As shown in Figure 1, a conventional electric power distribution system comprises an engine gearbox (2), a power distribution center (6), at least two three-phase electrical power generators (3) for being driven by the engine gearbox (2), and one generator control unit (7) for each generator (3). The electrical power generators (3) provide power to the power distribution centre (6). Each generator control unit (7) is connected to each one of the generators (3) for calculating and providing the excitation current required for the generator (3) to reach a desired generated voltage. This way, conventional architectures maintain the system in a balance condition, where each electric power generator supplies same voltage to the power distribution center.

However, these conventional systems provide duplicated elements, such as generator control units and sets of power feeder wires, which entail a more complicated electric power distribution architecture, at the same time that increase the cost and weight of the system.

US patent application US2006/108882 A1 describes a method and apparatus for achieving mechanical phase synchronization of multiple AC generators in an electrical power distribution system.

Therefore it would be desirable to provide technical means that simplify conventional electric power distribution systems, at the same time that reduce the associated weight while maximizing commonality and reuse of components from the electrical architecture on existing aircrafts. Also, it would be desirable to reduce the cost associated to traditional electric power distribution systems.

Additionally, it would be desirable to extend these technical means to all aircraft engines, such as the main engines or the APU.

### Summary of the invention

The present invention overcomes the above mentioned drawbacks by providing an electric power distribution system, which simplifies conventional electric power distribution systems, at the same time that achieves a weight and cost reduction.

The invention refers to an electric power distribution system for an aircraft that comprises an engine gearbox, a power distribution center, at least two three-phase synchronous electric power generators, and at least two neutral current transformers. The generators are adapted to be driven by the engine gearbox, and supply electric power to the distribution center. The neutral current transformers are connected respectively to each one of the electric power generators. According to the invention, the generators are electrically connected in parallel with each other, and the system further comprises a set of power feeder wires, and wherein the two electric power generators are connected with the set of power feeder wires for simultaneously supplying electric power to the power distribution center through the same set of power feeder wires. Additionally, the system of the invention comprises a generator control unit electrically coupled with each one of the electric power generators to individually feed each generator with an excitation field current. The generator control unit is electrically coupled with the two neutral current transformer of each generator, and it is adapted for sensing an instantaneous neutral-current value of each generator. Also, the generator control unit is adapted to perform a generator voltage regulation loop based on a desired voltage value and the two sensed instantaneous neutral-current values of the two generators, by individually modifying the excitation field current of each generator, to ensure that both generators are balanced and generate substantially the same voltage.

By connecting the electric power generators in parallel with each other, and providing the generator control unit with the connections and configuration required to maintain said generators producing the same voltage, the invention only requires extending a single set of power feeder wires towards the power distribution center.

For that, the generator control unit is both electrically coupled with each generator for sensing the instantaneous neutral-current value of each generator, and adapted to implement a voltage regulation loop based on a desired voltage value and the sensed instantaneous neutral-current.

Since the electric power generators are connected in parallel, the system of the invention only requires the use of a single set of power feeder wires between the electric power generators and the electric power to the distribution center. Since the electric power generators are mounted in the tail cone and/or in the wings of the aircraft, and the power distribution center is installed in the nose section, the invention reduces the number of wires crossing the whole length or a large part of the aircraft. Thus, the invention achieves to simplify the electric power distribution system.

Further, by the removal of a dedicated link between each generator of the auxiliary power unit compartment and the power distribution center of the aircraft, and of the associated installation components of said dedicated links, the invention allows reducing installation, recurrent and direct maintenance costs.

Additionally, the invention achieves a significant weight reduction by dispensing with a dedicated link per each generator of the engine and the power distribution centre.

Moreover, providing an electric power distribution system that only requires one set of power feeder wires from the engine compartment and the power distribution centre, the invention enables saving space, thereby offering extra room for either harness routing for any other new or existing aircraft system, or placing any new or existing aircraft equipment's.

### Brief description of the drawings

For a better comprehension of the invention, the following drawings are provided for illustrative and non-limiting purposes, wherein:
Figure 1 shows a schematic view of a conventional electric power distribution system of an aircraft, in which each electric power generator of an auxiliary power unit is linked to the power distribution center of the aircraft by a set of power feeder wires.
Figure 2 shows a schematic view of an electric power distribution system according to an embodiment of the present invention.
Figure 3 shows a schematic lateral view of an electric power distribution system according to another embodiment of the present invention.
Figure 4 shows a schematic perspective view of a generator having a housing and a rotor driveshaft that is driven by the engine gearbox, wherein both the housing and the rotor driveshaft have color marks to ensure phase synchronized generators installation.
Figure 5 shows a schematic front view of the generator housing and rotor driveshaft shown in Figure 4, wherein the generator housing and the engine gearbox are configured to match for providing a phase synchronized generators.

### Preferred embodiment of the invention

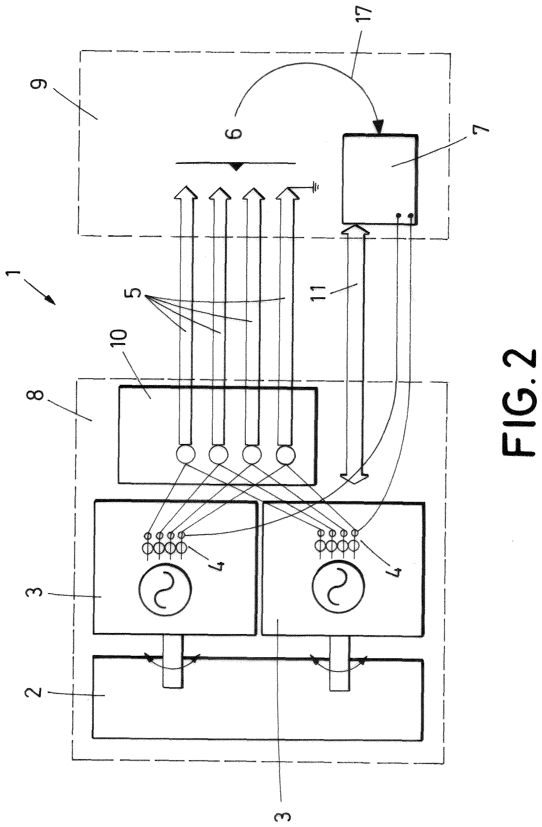

Figure 2 shows a schematic view of an electric power distribution system 1 for an aircraft, where the engine is an APU. As conventionally, the electric power distribution system 1 of Figure 2 comprises an APU gearbox 2, a power distribution center 6, at least two three-phase synchronous electric power generators 3 adapted to be driven by the APU gearbox 2 and supply electric power to the distribution center 6, and at least two neutral current transformers 4 connected respectively to each one of the electric power generators 3. Also, as conventionally, the electric power distribution system 1 comprises a set of power feeder wires 5 to conduct the electric power generated to the power distribution center 6, and a generator control unit 7 to feed the generator 3 with the excitation current required for the generators 3 to reach a desired generated voltage value. Reaching the desired voltage value ensures a balanced system.

According to the invention, the generators 3 are electrically connected in parallel with each other. Thus, the system 1 only requires a single set of power feeder wires 5 for supplying electric power to the power distribution center 6. With that, the invention reduces the weight of traditional systems.

Besides, the invention provides a single generator control unit 7 adapted to perform a voltage regulation loop where all generators 3 of the system are taking into account. This way, the invention reduces even more the weight of traditional systems, at the same time that simplifies the system. To perform this regulation loop, the generator control unit 7 is electrically coupled with either each one of the electric power generators 3, to individually feed them 3 with an excitation field current, and with the neutral current transformer 4 of each generator 3, to sense the instantaneous neutral-current value of each generator 3. These couplings allow the generator control unit 7 to control and regulate the power generated by each generator 3 of the system. Modifying the excitation field current value directly affects the generated voltage, and the instantaneous neutral-current value is indicative of how much is balanced the power generated by said generator 3.

For the regulation, the generator control unit 7 is adapted to individually modify the excitation field current of each generator 3 based on a desired voltage value and the two sensed instantaneous neutral-current values of the two generators 3. The invention ensures that generators 3 generate substantially the same voltage by providing the excitation field current required by each generator 3 to produce the desired voltage value.

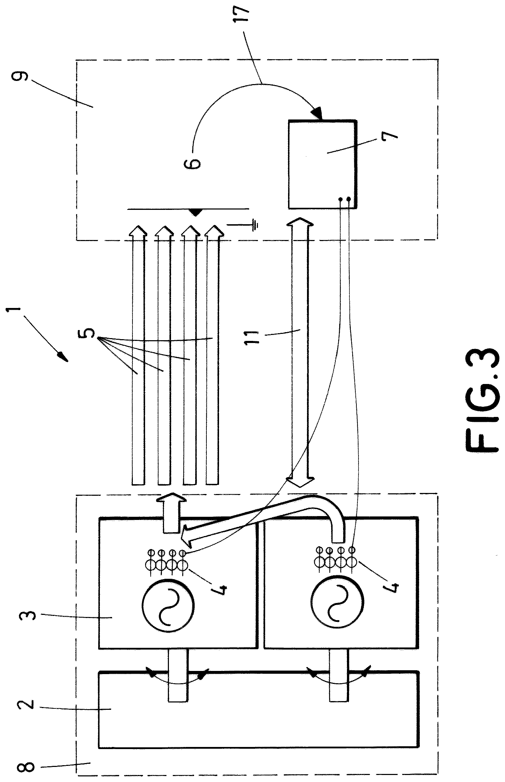

Preferentially, as shown in Figures 2 and 3, the generator control unit 7 is connected with the power distribution center 6 by a single dedicated link 17. While in the prior art, generators 3 supply electric power to the distribution center 6 individually, in the system of the invention generators 3 supplies the power simultaneously. Thus, only one dedicated link 17 is required.

By means of this dedicated link 17, the generator control unit 7 receives and monitors the voltage generated by generators 3. The generator control unit 7 is adapted to compare this measured voltage with the desired voltage value (typically, around 235Vac on newer aircrafts) for performing the regulation loop.

According to a preferred embodiment, the generator control unit 7 is adapted to provide a voltage synchronized regulation loop by determining an unbalance condition between generators 3 by obtaining the root mean square value of the instantaneous neutral-current difference between the at least two generators 3, and wherein in case of unbalanced condition is determined, the generator control unit 7 is further adapted to calculate the relative power factor from the instantaneous neutral-current difference and the desired voltage value to identify the unbalanced generator 3, and modify the excitation field current of the unbalanced generator 3 until a balanced condition is reached.

Preferentially, the generator control unit 7 is configured to determine an unbalance condition between generators 3 when the root mean square value of the instantaneous neutral-current difference between the at least two generators 3 is different from zero.

Once an unbalance condition between generators 3 is determined, an additional input condition is needed to identify which generator in under/overexcited with respect to the other. For that, the generator control unit 7 is configured to calculate the relative power factor from the instantaneous neutral-current difference between both generators 3 and the measured POR (Point Of Regulation) voltage value and to modify the excitation field current of the unbalanced generator 3 until a balanced condition is reached.

Preferentially, the generator control unit 7 is configured to increase the excitation current of the unbalanced generator 3 when its relative power factor is a negative value, and to decrease the excitation current of the unbalanced generator 7 when the relative power factor is a positive value.

To achieve the operability of an electric power distribution system with a parallel generators installation, apart from voltage, frequency and phase of the generators have to be synchronized.

For that, according to another preferred embodiment, the APU gearbox 2 is adapted for driving the at least two generators 3 at the same speed to provide a frequency synchronized system 1.

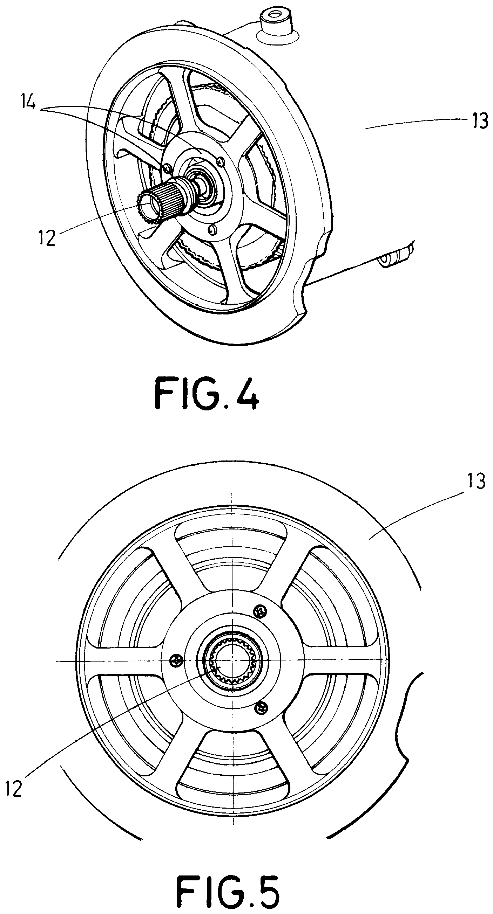

Preferentially, as shown in Figures 4 and 5, the generator 3 comprises one rotor driveshaft 12 driven by the engine gearbox 2, and the generator 3 comprises a housing 13 adapted to receive the rotor driveshaft 12.

As shown in Figure 4, in order to provide a phase synchronized generators 3, the generator housing 13 and its rotor driveshaft 12 can be provided with a color mark 14 to ensure generators 3 are mounted in phase to each other.

As shown in Figure 5, according to another preferred embodiment, the engine gearbox 2 and the rotor driveshaft 12 of the generator can be both configured to match for providing a phase synchronized generators. Preferably, the generator rotor driveshaft 12 comprises splines and the engine gearbox 2 has a serrated shaped, and both have a specific unequivocal matching shape allowing a foolproof insertion that respects the angular position of the rotor to ensure the phase synchronization.

According to another preferred embodiment, generators 3 include internal permanent magnet generators (PMG), and the generator control unit 7 is electrically coupled with each one of the generators 3. In this embodiment, the generator control unit 7 can monitor the PMG to instantaneously detect the phase and frequency of each generator 3. Also, the generator control unit 7 can be further configured to disconnect the system 1 and trigger a synchronization fault signal if the relative phases and frequencies of the generators 3 surpass tolerance thresholds.

As shown in Figure 1, in conventional electric power distribution systems, each generator control unit 7 is electrically coupled with each one of the generators 3 by a dedicated PMG link 11. However, according to the invention, and as shown in Figures 2 and 3, the PMG links 11 can be coupled to the single dedicated generator control unit 7.

Figure 2 shows a first embodiment of the invention. According to this first embodiment, the system 1 further comprises a terminal block 10 adapted for receiving power output wires of each generator 3 and outputting the set of power feeder wires 5 through which generators 3 supply electric power to the power distribution center 6.

Figure 3 shows a second embodiment of the invention. According to this second embodiment, generators 3 have power output wires, and wherein the power output wires of all the generators 3 are connected together at the entrance of the single set of power feeder wires 5. This second embodiment is lighter than the first embodiment shown in Figure 2.

Preferentially, the generators 3 of the system have a three-phase four-wire structure.

According to a preferred embodiment, the power distribution center 6 is located at an aircraft nose section 9, and wherein the engine gearbox 2 and the three-phase synchronous electric power generators 3 are housed at the aircraft tail cone 8. In this case, the engine gearbox refers to an APU gearbox, so that the invention reduces the number of wires crossing the whole length of the aircraft. At the same time, the invention reduces the associated weight, costs, and space required by traditional systems.

Additionally, in another preferred embodiment, the power distribution center 6 is located at an aircraft nose section 9, and wherein the engine gearbox 2 and the three-phase synchronous electric power generators 3 are housed at the central section (between the nose and the tail section) of the aircraft. In this case, the engine gearbox 2 could be a main engine gearbox, and in such a case, the invention would also reduce the number of wires crossing the aircraft.

The electric power distribution system 1 of the two last embodiments comprises a terminal block 10, as the embodiment shown in Figure 2. The terminal block 10 is preferably housed close to the engine to maximize the weight saving.

Finally, according to another aspect of the present invention, the invention further comprises an aircraft comprising the electric power distribution system 1 as described.

With respect to existing electrical network architectures, the electric power distribution system of the invention presents the following advantages:
- aircraft harness weight saving, aircraft installation simplification, and recurrent cost reduction, since only four feeder (three phases + neutral) are needed to link the parallel generators with the power distribution center compared with the at least eight feeder conventionally used, and
- equipment weight and recurrent cost reduction, since only a single generator control unit can be used to control and regulate the parallel generators and the aircraft power distribution center would see them as a single one (simplified power management).

With respect to new electrical network architectures, the electric power distribution system of the invention presents the following advantages:
- modularity, and new developments non-recurrent cost reduction, since the system of the invention allows scaling up the power generation capabilities of a more electrical aircraft without the need to design new bigger electrical generators. Additionally, the system of the invention avoids redesigning the aircraft power distribution when an aircraft evolution requires passing from a single-engine generator to a dual-engine generator in order to cope with increased power needs, since the aircraft power distribution center would see the parallel generators as a single one.
- in case of electric power generators 3 components failure, the system could work in a degraded mode (reduced maximum power) excluding the faulty generator by means of isolation contactors.

## Claims

1. Aircraft electric power distribution system (1) comprising:
- an engine gearbox (2), and a power distribution center (6),
- at least two three-phase synchronous electric power generators (3) adapted to be driven by the engine gearbox (2), and supply electric power to the distribution center (6), the generators (3) being electrically connected in parallel with each other,
- at least two neutral current transformers (4) connected respectively to each one of the electric power generators (3),
- a single generator control unit (7) electrically coupled with each one of the electric power generators (3) to individually feed each generator (3) with an excitation field current;
**characterized in that** the system (1) further comprises:
- a single set of power feeder wires (5) between the electric power generators (3) and the power distribution center (6), and wherein the two electric power generators (3) are connected with the set of power feeder wires (5) for simultaneously supplying electric power to the power distribution center (6) through the same set of power feeder wires (5);
wherein the generator control unit (7) is electrically coupled with the neutral current transformer (4) of each generator (3), and it is adapted for sensing an instantaneous neutral-current value of each generator (3);
said single generator control unit (7) being connected with the power distribution center (6) by a single dedicated link (17);
and wherein the generator control unit (7) is adapted to perform a generator voltage regulation loop based on a desired voltage value and the two sensed instantaneous neutral-current values of the two generators (3), by individually modifying the excitation field current of each generator (3), to ensure that both generators (3) are balanced generating substantially the same voltage.

2. Aircraft electric power distribution system (1) according to claim 1, wherein the generator control unit (7) is adapted to provide a voltage synchronized regulation loop by
- determining an unbalance condition between generators (3) by obtaining the root mean square value of the instantaneous neutral-current difference between the at least two generators (3),
and wherein in case of unbalanced condition is determined, the generator control unit (7) is further adapted to
- calculate the relative power factor from the instantaneous neutral-current difference and the desired voltage value to identify the unbalanced generator (3), and
- modify the excitation field current of the unbalanced generator (3) until a balanced condition is reached.

3. Aircraft electric power distribution system (1) according to claim 2, wherein the generator control unit (7) is configured to determine an unbalance condition between generators (3) when the root mean square value of the instantaneous neutral-current difference between the at least two generators (3) is different from zero.

4. Aircraft electric power distribution system (1) according to any of claims 2 - 3, wherein the generator control unit (7) is configured to increase the excitation current of the unbalanced generator (3) when the relative neutral power factor is a negative value, and to decrease the excitation current of the unbalanced generator (3) when the relative neutral power factor is a positive value.

5. Aircraft electric power distribution system (1) according to any of preceding claims, wherein the engine gearbox (2) is adapted for driving the at least two generators (3) at the same speed to provide a frequency synchronized system (1).

6. Aircraft electric power distribution system (1) according to any of preceding claims, wherein the generator (3) comprises at least one rotor driveshaft (12) configured for being driven by the engine gearbox (2), and each generator (3) comprises a housing (13) adapted to receive the rotor driveshaft (12), and wherein both the generator housing (13) and the generator rotor driveshaft (12) has a color mark (14) to ensure generators (3) are mounted in phase to each other.

7. Aircraft electric power distribution system (1) according to any of preceding claims, wherein generators (3) comprise permanent magnet generators, and the generator control unit (7) is electrically coupled with each one of the generators (3) and is further configured to disconnect the system (1) and trigger a synchronization fault signal if the relative phases and frequencies of the generators (3) surpasses tolerance thresholds.

8. Aircraft electric power distribution system (1) according to any of preceding claims, wherein generators (3) have power output wires, and wherein the power output wires of all the generators (3) are connected together at the entrance of the single set of power feeder wires (5).

9. Aircraft electric power distribution system (1) according to any of claims 1 - 7, further comprising a terminal block (10) adapted for receiving power output wires of each generator (3) and outputting the set of power feeder wires (5) through which generators (3) supply electric power to the power distribution center (6).

10. Aircraft electric power distribution system (1) according to any of preceding claims, wherein the generators (3) have a three-phase four-wire structure.

11. Aircraft electric power distribution system (1) according to any of preceding claims, wherein the power distribution center (6) is located at an aircraft nose section (9), and wherein the engine gearbox (2) and the three-phase synchronous electric power generators (3) are housed at the aircraft tail cone (8).

12. Aircraft electric power distribution system (1) according to any of preceding claims 1-10, wherein the power distribution center (6) is located at an aircraft nose section (9), and wherein the engine gearbox (2) and the three-phase synchronous electric power generators (3) are housed at the central section of the aircraft.

13. Aircraft electric power distribution system (1) according to claims 9 and 11, wherein the terminal block (10) is housed at the aircraft tail cone (8), close to the engine to maximize the weight saving.

14. An aircraft comprising an electric power distribution system (1) according to any of the preceding claims.

## Patentansprüche

1. Flugzeugstromverteilungssystem (1) mit:
- einem Motorgetriebe (2) und einem Stromverteilungszentrum (6),
- mindestens zwei dreiphasigen synchronen Stromgeneratoren (3), die durch das Motorgetriebe (2) antreibbar sind und Strom an das Verteilungszentrum (6) liefern, wobei die Generatoren (3) elektrisch parallel miteinander verbunden sind,
- mindestens zwei neutralen Stromtransformatoren (4), die jeweils mit jedem der Stromgeneratoren (3) verbunden sind,
- eine einzelnen Generatorsteuereinheit (7), die mit jedem der Stromgeneratoren (3) elektrisch verbunden ist, um jedem Generator (3) einen Erregungsfeldstrom zuzuführen;
**dadurch gekennzeichnet, dass** das System (1) ferner aufweist:
- einen einzelnen Satz von Stromzufuhrleitungen (5) zwischen den Stromgeneratoren (3) und dem Stromverteilungszentrum (6), und wobei die beiden Stromgeneratoren (3) mit dem Satz von Stromzufuhrleitungen (5) verbunden sind, um gleichzeitig durch denselben Satz von Stromzufuhrleitungen (5) Strom zu dem Stromverteilungszentrum (6) zu liefern;
- wobei die Generatorsteuereinheit (7) elektrisch mit dem neutralen Stromtransformator (4) jedes Generators (3) verbunden ist, und geeignet ist, einen Momentan-Neutralstromwert jedes Generators (3) zu erfassen;
- wobei die einzelne Generatorsteuereinheit (7) mit dem Stromverteilungszentrum (6) durch eine einzelne dedizierte Verbindung (17) verbunden ist;
- und wobei Generatorsteuereinheit (7) geeignet ist, basierend auf einer gewünschten Spannung und den beiden erfassten Momentan-Neutralstromwerten der beiden Generatoren einen Generatorspannungsregelkreis durchzuführen, indem der Erregungsfeldstrom jedes Generators (3) modifiziert wird, um zu gewährleisten, dass beide Generatoren (3) ausgewogen im Wesentlichen dieselbe Spannung erzeugen.

2. Flugzeugstromverteilungssystem (1) nach Anspruch 1, bei welchem die Generatorsteuereinheit (7) geeignet ist, einen spannungssynchronisierten Regelkreis zu bilden, durch
- Feststellen eines Ungleichgewichtszustands zwischen Generatoren (3) durch Erhalten des Effektivwerts der Momentan-Neutralstromdifferenz zwischen den mindestens zwei Generatoren (3),
und wobei im Falle der Feststellung eines Ungleichgewichtszustands die Generatorsteuereinheit (7) ferner geeignet ist:
- den relativen Stromfaktor aus der Momentan-Neutralstromdifferenz und dem gewünschten Spannungswert zu berechnen, um den unausgewogenen Generator (3) zu identifizieren, und
- den Erregungsfeldstrom des unausgewogenen Generator (3) zu modifizieren, bis ein Gleichgewichtszustand erreicht ist.

3. Flugzeugstromverteilungssystem (1) nach Anspruch 2, bei welchem die Generatorsteuereinheit (7) dazu ausgebildet ist, einen Ungleichgewichtszustand zwischen Generatoren (3) festzustellen, wenn der Effektivwert der Momentan-Neutralstromdifferenz zwischen den mindestens zwei Generatoren (3) von null verschieden ist.

4. Flugzeugstromverteilungssystem (1) nach einem der Ansprüche 2 - 3, bei welchem die Generatorsteuereinheit (7) dazu ausgebildet ist, den Erregungsstrom des unausgewogenen Generators (3) zu erhöhen, wenn der relative Neutralstromfaktor ein negativer Wert ist, und den Erregungsstrom des unausgewogenen Generators (3) zu verringern, wenn der relative Neutralstromfaktor ein positiver Wert ist.

5. Flugzeugstromverteilungssystem (1) nach einem der vorhergehenden Ansprüche, bei welchem das Motorgetriebe (2) geeignet ist, die mindestens zwei Generatoren (3) mit derselben Geschwindigkeit anzutreiben, um ein frequenzsynchronisiertes System (1) zu bilden.

6. Flugzeugstromverteilungssystem (1) nach einem der vorhergehenden Ansprüche, bei welchem der Generator (3) mindestens eine Rotorantriebswelle (12) aufweist, die zum Antrieb durch das Motorgetriebe (2) ausgebildet ist, und jeder Generator (3) ein Gehäuse (13) aufweist, das zur Aufnahme der Rotorantriebswelle (12) geeignet ist, und wobei sowohl das Generatorgehäuse (13) als auch die Generator-Rotorantriebswelle (12) eine Farbmarkierung (14) aufweist, um zu gewährleisten, dass die Generatoren (3) miteinander in Phase montiert sind.

7. Flugzeugstromverteilungssystem (1) nach einem der vorhergehenden Ansprüche, bei welchem die Generatoren (3) Permanentmagnetgeneratoren aufweisen, und die Generatorsteuereinheit (7) elektrisch mit jedem der Generatoren (3) gekoppelt ist und ferner dazu ausgebildet ist, das System (1) zu trennen und ein Synchronisationsfehlersignal auszulösen, wenn die relativen Phasen und Frequenzen der Generatoren (3) Toleranzschwellenwerte überschreiten.

8. Flugzeugstromverteilungssystem (1) nach einem der vorhergehenden Ansprüche, bei welchem die Generatoren (3) Stromausgangsleitungen aufweisen, und wobei die Stromausgangsleitungen sämtlicher Generatoren (3) am Eingang des einzelnen Satzes von Stromzufuhrleitungen (5) zusammen verbunden sind.

9. Flugzeugstromverteilungssystem (1) nach einem der Ansprüche 1 - 7, ferner mit einem Anschlussblock (10), der geeignet ist, Stromausgangsleitungen jedes Generators (3) aufzunehmen und den Satz von Stromzufuhrleitungen (5) auszugeben, durch welche die Generatoren (3) dem Stromverteilungszentrum (6) Strom zuführen.

10. Flugzeugstromverteilungssystem (1) nach einem der vorhergehenden Ansprüche, bei welchem die Generatoren (3) eine dreiphasige Vierdrahtstruktur aufweisen.

11. Flugzeugstromverteilungssystem (1) nach einem der vorhergehenden Ansprüche, bei welchem das Stromverteilungszentrum (6) sich in einem Flugzeugnasenabschnitt (9) befindet, und wobei das Motorgetriebe (2) und die dreiphasigen synchronen Stromgeneratoren (3) im Heckkegel (8) des Flugzeug aufgenommen sind.

12. Flugzeugstromverteilungssystem (1) nach einem der Ansprüche 1 -10, bei welchem das Stromverteilungszentrum (6) sich in einem Flugzeugnasenabschnitt (9) befindet, und wobei das Motorgetriebe (2) und die dreiphasigen synchronen Stromgeneratoren (3) im Mittelabschnitt des Flugzeug aufgenommen sind.

13. Flugzeugstromverteilungssystem (1) nach den Ansprüchen 9 und 11, bei welchem der Anschlussblock (10) im Heckkegel (8) nahe dem Motor aufgenommen ist, um die Gewichtsersparnis zu maximieren.

14. Flugzeug mit einem Stromverteilungssystem (1) nach einem der vorhergehenden Ansprüche.

## Revendications

1. Système de distribution d'énergie électrique pour un aéronef (1) comprenant :
- un bloc-moteur (2) et un centre de distribution d'énergie (6) ;
- au moins deux générateurs d'énergie électrique synchrones triphasés (3) qui sont adaptés pour être pilotés par le bloc-moteur (2) et pour fournir de l'énergie électrique au centre de distribution d'énergie (6), les générateurs (3) étant connectés électriquement en parallèle les uns aux autres ;
- au moins deux transformateurs de courant de neutre (4) qui sont respectivement connectés à chacun des générateurs d'énergie électrique (3) ;
- une unique unité de commande de générateur (7) qui est couplée électriquement à chacun des générateurs d'énergie électrique (3) pour alimenter individuellement chaque générateur (3) avec un courant de champ d'excitation ;
**caractérisé en ce que** le système (1) comprend en outre :
- un unique jeu de fils de moyen d'alimentation en énergie (5) entre les générateurs d'énergie électrique (3) et le centre de distribution d'énergie (6), et dans lequel les deux générateurs d'énergie électrique (3) sont connectés avec le jeu de fils de moyen d'alimentation en énergie (5) pour fournir simultanément de l'énergie électrique au centre de distribution d'énergie (6) par l'intermédiaire du même jeu de fils de moyen d'alimentation en énergie (5) ;
dans lequel :
l'unité de commande de générateur (7) est couplée électriquement avec le transformateur de courant de neutre (4) de chaque générateur (3) et elle est adaptée pour détecter une valeur de courant de neutre instantanée de chaque générateur (3) ;
ladite unique unité de commande de générateur (7) étant connectée au centre de distribution d'énergie (6) au moyen d'une unique liaison dédiée (17) ;
et dans lequel :
l'unité de commande de générateur (7) est adaptée pour réaliser une boucle de régulation de tension de générateur sur la base d'une valeur de tension souhaitée et des deux valeurs de courant de neutre instantanées détectées des deux générateurs (3), en modifiant individuellement le courant de champ d'excitation de chaque générateur (3), pour assurer que les générateurs (3) sont tous deux équilibrés et qu'ils génèrent sensiblement la même tension.

2. Système de distribution d'énergie électrique pour un aéronef (1) selon la revendication 1, dans lequel l'unité de commande de générateur (7) est adaptée pour constituer une boucle de régulation synchronisée en tension en :
- déterminant une condition de déséquilibre entre les générateurs (3) en obtenant la valeur quadratique moyenne de la différence de courant de neutre instantanée entre les au moins deux générateurs (3) ; et dans lequel :
dans le cas où une condition déséquilibrée est déterminée, l'unité de commande de générateur (7) est en outre adaptée pour :
- calculer le facteur d'énergie relatif à partir de la différence de courant de neutre instantanée et de la valeur de tension souhaitée pour identifier le générateur déséquilibré (3) ; et pour
- modifier le courant de champ d'excitation du générateur déséquilibré (3) jusqu'à ce qu'une condition équilibrée soit atteinte.

3. Système de distribution d'énergie électrique pour un aéronef (1) selon la revendication 2, dans lequel l'unité de commande de générateur (7) est configurée pour déterminer une condition de déséquilibre entre les générateurs (3) lorsque la valeur quadratique moyenne de la différence de courant de neutre instantanée entre les au moins deux générateurs (3) est différente de zéro.

4. Système de distribution d'énergie électrique pour un aéronef (1) selon l'une quelconque des revendications précédentes 2 et 3, dans lequel l'unité de commande de générateur (7) est configurée pour augmenter le courant d'excitation du générateur déséquilibré (3) lorsque le facteur d'énergie de neutre relatif est une valeur négative et pour diminuer le courant d'excitation du générateur déséquilibré (3) lorsque le facteur d'énergie de neutre relatif est une valeur positive.

5. Système de distribution d'énergie électrique pour un aéronef (1) selon l'une quelconque des revendications précédentes, dans lequel le bloc-moteur (2) est adapté pour piloter les au moins deux générateurs (3) à la même vitesse pour constituer un système synchronisé en fréquence (1).

6. Système de distribution d'énergie électrique pour un aéronef (1) selon l'une quelconque des revendications précédentes, dans lequel le générateur (3) comprend au moins un arbre d'entraînement de rotor (12) qui est configuré pour être entraîné par le bloc-moteur (2), et chaque générateur (3) comprend un carter (13) qui est adapté pour recevoir l'arbre d'entraînement de rotor (12), et dans lequel le carter de générateur (13) et l'arbre d'entraînement de rotor de générateur (12) comportent tous deux un repère en couleur (14) pour assurer que les générateurs (3) sont montés en phase les uns par rapport aux autres.

7. Système de distribution d'énergie électrique pour un aéronef (1) selon l'une quelconque des revendications précédentes, dans lequel les générateurs (3) comprennent des générateurs à aimants permanents, et l'unité de commande de générateur (7) est couplée électriquement à chacun des générateurs (3) et est en outre configurée pour déconnecter le système (1) et déclencher un signal de défaut de synchronisation si les phases et fréquences relatives des générateurs (3) sont au-delà de seuils de tolérance.

8. Système de distribution d'énergie électrique pour un aéronef (1) selon l'une quelconque des revendications précédentes, dans lequel les générateurs (3) comportent des fils de mise à disposition d'énergie en sortie, et dans lequel les fils de mise à disposition d'énergie en sortie de tous les générateurs (3) sont connectés ensemble au niveau du positionnement en entrée de l'unique jeu de fils de moyen d'alimentation en énergie (5).

9. Système de distribution d'énergie électrique pour un aéronef (1) selon l'une quelconque des revendications précédentes 1 à 7, comprenant en outre un bornier (10) qui est adapté pour recevoir les fils de mise à disposition d'énergie en sortie de chaque générateur (3) et pour le positionnement en sortie du jeu de fils de moyen d'alimentation en énergie (5) par l'intermédiaire duquel les générateurs (3) fournissent de l'énergie électrique au centre de distribution d'énergie (6).

10. Système de distribution d'énergie électrique pour un aéronef (1) selon l'une quelconque des revendications précédentes, dans lequel les générateurs (3) présentent une structure quadrifilaire triphasée.

11. Système de distribution d'énergie électrique pour un aéronef (1) selon l'une quelconque des revendications précédentes, dans lequel le centre de distribution d'énergie (6) est localisé au niveau d'une section de nez d'aéronef (9), et dans lequel le bloc-moteur (2) et les générateurs d'énergie électrique synchrones triphasés (3) sont logés au niveau du cône de queue d'aéronef (8).

12. Système de distribution d'énergie électrique pour un aéronef (1) selon l'une quelconque des revendications précédentes 1 à 10, dans lequel le centre de distribution d'énergie (6) est localisé au niveau d'une section de nez d'aéronef (9), et dans lequel le bloc-moteur (2) et les générateurs d'énergie électrique synchrones triphasés (3) sont logés au niveau de la section centrale de l'aéronef.

13. Système de distribution d'énergie électrique pour un aéronef (1) selon les revendications précédentes 9 et 11, dans lequel le bornier (10) est logé au niveau du cône de queue d'aéronef (8), à proximité du moteur pour maximiser l'économie en termes de poids.

14. Aéronef comprenant un système de distribution d'énergie électrique (1) selon l'une quelconque des revendications précédentes.
